# EUROPÄISCHE PATENTSCHRIFT

(11) **EP 2 178 981 B1**
(45) Veröffentlichungstag und Bekanntmachung des Hinweises auf die Patenterteilung: **09.03.2016**
(21) Anmeldenummer: 08802981.4
(22) Anmeldetag: 08.08.2008
(51) Int. Cl.: C08L 81/02, C08J 3/00

(54) **POLYPHENYLENSULFID-(PER-)FLUORPOLYMER-MATERIALIEN UND VERFAHREN ZU IHRER HERSTELLUNG UND VERWENDUNG**
POLYPHENYLENE SULFIDE (PER)FLUOROPOLYMER MATERIALS AND PROCESS FOR PREPARATION AND USE THEREOF
MATÉRIAUX POLYPHÉNYLÈNESULFURE-(PER-)FLUOROPOLYMÈRES ET LEUR PROCÉDÉ DE FABRICATION ET D'UTILISATION

(30) Priorität: 13.08.2007 DE 102007038929
(43) Veröffentlichungstag der Anmeldung: 28.04.2010
(73) Patentinhaber: Leibniz-Institut für Polymerforschung Dresden e.V., 01069 Dresden (DE)
(72) Erfinder: LEHMANN, Dieter, 01640 Coswig (DE)
(74) Vertreter: Rauschenbach, Marion
(86) Internationale Anmeldenummer: PCT/EP2008/060467
(87) Internationale Veröffentlichungsnummer: WO 2009/021922

(56) Entgegenhaltungen:
- EP-A- 0 761 757
- WO-A-2005/042599
- WO-A-2005/092938
- DE-A1- 19 823 609
- US-A- 6 054 537

## Beschreibung

Die Erfindung bezieht sich auf das Gebiet der Chemie und betrifft Polyphenylen-sulfid-(Per-)Fluorpolymer-Materialien, die beispielsweise als Tribomaterialien für z. B. Gleitlager, Zahnräder oder als tribologisch beanspruchtes Material in der Luft- und Raumfahrt, im Automobilbereich z. B. für Kugellagerschalen in Gelenken sowie in der Technik in Bauteilen mit hohen Anforderungen (z. B. als Kugellagerkäfige) und tribologisch beanspruchte Sportartikel-Laufflächen eingesetzt werden können und ein Verfahren zu ihrer Herstellung.

Polyphenylensulfide (PPS) als Hochleistungswerkstoffe werden mit verschiedenen Füll- und Verstärkungsstoffen kommerziell modifiziert angeboten. Bei gefüllten und verstärkten PPS sind diese Füll- und Verstärkungsstoffe in der PPS-Polymermatrix nach dem Stand der Technik physikalisch eingelagert.

Zu den Werkstoffen mit besonderen tribologischen Eigenschaften zählen die (Per-)Fluorpolymere wie z. B. das Polytetrafluorethylen (PTFE) und das FEP.

In bekannten Verfahren zur Modifizierung von PTFE wird eine chemische Aktivierung von PTFE mit (1.) Natriumamid in flüssigem Ammoniak und (2.) mit metallorganischen Verbindungen in aprotischen inerten Lösungsmitteln erreicht. Über diese Modifizierungen können reaktiv oder auch nur über adsorptive Kräfte verbesserte Grenzflächenwechselwirkungen erreicht werden.

Weiterhin sind als Verfahren die strahlenchemische Modifizierung von (Per-)Fluor-polymeren in Abwesenheit oder in Gegenwart von Agenzien wie z. B. (Luft-)Sauerstoff und/oder die plasmachemische Modifizierung von (Per-)Fluorpolymeren sowie der thermomechanische Abbau von PTFE bekannt [A. Heger et al., Technologie der Strahlenchemie an Polymeren, Akademie-Verlag Berlin 1990; PTFE-Mikropulver TF9205, Dyneon].

Weiterhin ist die Modifizierung oder Funktionalisierung von PTFE-Partikeln durch Monomerpfropfung oder Kopplung mit Polymeren bekannt (US 5,576,106, DE 198 23 609 A1, DE 103 51 813 A1, DE 103 51 814 A1). Da die Schmelzetemperaturen während der thermoplastischen (Weiter-)Verarbeitung (z. B. durch Extrusion) oder bei der Formgebung von PPS bei > 300°C liegen, sind die bekannten PTFE-Modifikate mit aliphatisch gepfropften, funktionellen Gruppen und/oder Polymeren aufgrund der bekannten niedrigen thermischen Stabilität dieser aliphatischen Verbindungen für die Kopplung mit PPS unter Schmelzeverarbeitungsbedingungen nicht einsetzbar.

Eine Kompatibilisierung von PTFE mit PPS, im Rahmen dieser Erfindung soll darunter eine chemische Kopplung verstanden werden, ist bisher nicht beschrieben worden.

Aufgabe der vorliegenden Erfindung ist es, Polyphenylensulfid-(Per-)Fluorpolymer-Materialien anzugeben, die ein verbessertes tribologisches Verhalten aufweisen und ein einfaches und kostengünstiges Verfahren zu ihrer Herstellung und Verwendung.

Die Aufgabe wird durch die in den Ansprüchen 1-18 angegebene Erfindung gelöst. Vorteilhafte Ausgestaltungen sind Gegenstand der Unteransprüche.

Die erfindungsgemäßen Polyphenylensulfid-(Per-)Fluorpolymer-Materialien gemäß Anspruch 1 bestehen aus einem über Schmelzemodifizierung hergestellten Material aus einer Polyphenylensulfid-Polymer-Matrix (PPS-Polymer-Matrix) mit darin (poly-)dispers verteilten modifizierten (Per-)Fluorpolymeren, wobei die Modifizierung der (Per-)Fluorpolymere mit funktionellen Gruppen realisiert ist, und die modifizierten (Per-)Fluorpolymer-Partikel über chemische Kopplungen mit der PPS-Polymer-Matrix gebunden vorliegen, wobei die chemischen Kopplungen während der Schmelzemodifizierung durch Reaktion mit bereits vorhandenen funktionellen, reaktiven Gruppen der (Per-)Fluorpolymere und/oder mit während der Schmelzemodifizierung entstandenen funktionellen Gruppen aus persistenten (langlebigen) Perfluorcarbon-(peroxy-)Radikalen der (Per-)Fluorpolymere und/oder mit während der Schmelzemodifizierung entstandenen funktionellen (re-)aktiven Gruppen der (Per-)Fluorpolymere erfolgt sind.

Die (Per-)Fluorpolymereliegen über Thioether- und/oder Thiolester-Bindung(en) mit der PPS-Polymer-Matrix chemisch gekoppelt vor.

Ebenfalls vorteilhafterweise sind als PPS-Matrix lineare und/oder verzweigte Polymere vorhanden.

Weiterhin vorteilhafterweise sind als (Per-)Fluorpolymere Polytetrafluorethylen (PTFE) und/oder Poly(tetrafluorethylen-co-hexafluorpropylen) (FEP) und/oder Poly(ethylen-co-tetrafluorethylen) (ETFE) und/oder Polychlortrifluorethylen (PCTFE) und/oder Poly(tetrafluorethylen-co-perfluoralkylvinylether) (TFA oder PFA) vorhanden.

Und auch vorteilhafterweise liegen die als Nukleierungsmittel/Kristallkeimbildner fungierenden chemisch gekoppelten (Per-)Fluorpolymere fein verteilt in der PPS-Polymer-Matrix vor.

Bei dem erfindungsgemäßen Verfahren gemäß Anspruch 5 zur Herstellung von Polyphenylensulfid-(Per-)Fluorpolymer-Materialien werden Polyphenylensulfid (PPS) mit Thiol- und/oder Thiolat-Gruppen mit einem oder mehreren modifizierten (Per-)Fluorpolymer-(Mikro-/Nano-)Pulvern ein- oder mehrstufig in Schmelze reaktiv compoundiert, wobei weitere thermoplastische oder duromere (Hochleistungs-)Polymere und/oder Füllstoffe und/oder Verstärkungsstoffe und/oder Additive zugegeben werden können.

Vorteilhafterweise werden modifizierte (Per-)Fluorpolymer-Pulver mit olefinisch ungesättigten Gruppen und/oder mit Carbonsäuregruppen und/oder Carboxylaten und/oder Carbonsäurehalogenidgruppen, noch vorteilhafterweise mit Perfluoralkylengruppen oder die Carbonsäurehalogenidgruppen in Form von Carbonsäurefluoridgruppen eingesetzt.

Ebenfalls vorteilhafterweise werden modifizierte (Per-)Fluorpolymer-Pulver mit persistenten (langlebigen) Perfluorcarbon-(peroxy-)Radikalen, noch vorteilhafterweise werden modifizierten (Per-)Fluorpolymer-Pulver mit persistenten (langlebigen) Perfluorcarbon-(peroxy-)Radikalen eingesetzt, die durch strahlenchemische Modifizierung von (Per-)Fluorpolymer-(Mikro-/Nano-)Pulverpartikel unter Sauerstoffeinfluss hergestellt worden sind.

Weiterhin vorteilhafterweise werden (Per-)Fluorpolymere mit thermisch instabilen, funktionellen Gruppen eingesetzt.

Und auch vorteilhafterweise werden als modifiziertes (Per-)Fluorpolymer-(Mikro-/Nano-)Pulver Polytetrafluorethylen (PTFE) und/oder Poly(tetrafluorethylen-co-hexafluorpropylen) (FEP) und/oder Poly(ethylen-co-tetrafluorethylen) (ETFE) und/oder Polychlortrifluorethylen (PCTFE) und/oder Poly(tetrafluorethylen-co-perfluoralkylvinylether) (TFA oder PFA) eingesetzt, wobei noch vorteilhafterweise als modifiziertes (Per-)Fluorpolymer-(Mikro-/Nano-)Pulver strahlenchemisch abgebautes PTFE und noch vorteilhafterweise unter Sauerstoffeinfluss strahlenchemisch abgebautes PTFE eingesetzt wird.

Vorteilhafterweise wird als strahlenchemisch abgebautes PTFE ein mit mindestens 20 kGy, noch vorteilhafterweise mit mindestens 100 kGy strahlenchemisch abgebautes und modifiziertes PTFE eingesetzt wird.

Vorteilhaft ist es auch, wenn als modifiziertes (Per-)Fluorpolymer-(Mikro-/Nano-)Pulver ein thermisch/thermomechanisch modifiziertes (Per-)Fluorpolymer-(Mikro-/Nano-)Pulverpartikel eingesetzt wird.

Ebenfalls vorteilhaft ist es, wenn PPS mit reaktiven Thiol- und/oder Thiolatgruppen in linearer und/oder verzweigter Form eingesetzt wird.

Weiterhin vorteilhaft ist es, wenn PPS-Polymere mit einer geringen Anzahl an Thiol-und/oder Thiolatgruppen im Verhältnis zu thiol- und/oder thiolatgruppenreichen PPS-Polymeren von 99 : 1 bis 1 : 99 eingesetzt werden.

Auch vorteilhaft ist es, wenn als PPS-Polymere mit einem geringen Anteil an Thiol-und/oder Thiolatgruppen PPS-Polymere mit ≤ 1 % Thiolgruppen an den PPS-Kettenenden eingesetzt werden.

Von Vorteil ist es auch, wenn als PPS-Polymere mit einem hohen Anteil an Thiol-und/oder Thiolatgruppen PPS-Polymere mit > 1 % Thiolgruppen an den PPS-Kettenenden eingesetzt werden.

Ebenfalls von Vorteil ist es, wenn 1 bis 99 Ma.-%, noch vorteilhafterweise 5 bis 50 Ma.-% und nochmals vorteilhafterweise 10 bis 30 Ma.-% an modifiziertem (Per-)Fluorpolymer-(Mikro-/Nano-)Pulverpartikeln, bezogen auf das PPS-Polymer, eingesetzt werden.

Weiterhin von Vorteil ist es, wenn weitere thermoplastische oder duromere (Hochleistungs-)Polymere und/oder Füllstoffe und/oder Verstärkungsstoffe vor oder während oder nach der reaktiven Compoundierung zugegeben werden.

Und auch von Vorteil ist es, wenn die reaktive Compoundierung in einem Schmelzemischer und/oder in einem Kneter und/oder einem Zwei- oder Mehrwellenextruder und/oder in einem Planetwalzenextruder durchgeführt wird.

Vorteilhaft ist es auch, wenn die reaktive Compoundierung bei Schmelzeverarbeitungstemperaturen von mindestens der oder über der Schmelzetemperatur des PPS-Materials durchgeführt wird.

Vorteilhafterweise wird die reaktive Compoundierung bei Schmelzeverarbeitungstemperaturen von mindestens der oder über der Schmelzetemperatur des (Per-)Fluorpolymer-Materials durchgeführt.

Auch vorteilhaft ist es, wenn eine weitere reaktive Umsetzung während und/oder nach der reaktiven Compoundierung durchgeführt wird.

Ebenfalls vorteilhafterweise wird das modifizierte (Per-)Fluorpolymer-(Mikro-/Nano-)Pulver während der Compoundierung an einer oder mehreren Dosierstellen in die Schmelze zugesetzt.

Weiterhin vorteilhaft ist es, wenn das modifizierte (Per-)Fluorpolymer-(Mikro-/Nano-)Pulver als Gemisch aus unmodifizierten und modifizierten (Per-)Fluorpolymeren eingesetzt wird.

Die erfindungsgemäße Verwendung von Polyphenylensulfid-(Per-)Fluorpolymer-Materialien erfolgt als Kompaktsubstanz und/oder als Zusatz/Bestandteil von Gleitlagern und/oder in oleophoben und/oder hydrophoben oder damit ausgerüsteten Teil- oder Kompaktmaterialien und/oder in Formteilen und/oder als Oberflächenmodifizierungskomponente in (Gleit-)Filmen oder als Beschichtung und/oder in (Gleit-)Folien und/oder als Blendkomponente und/oder als Additiv.

Vorteilhafterweise werden die Polyphenylensulfid-(Per-)Fluorpolymer-Materialien zur Weiterverarbeitung zu einer Thermoplastschmelze und/oder zu einer reaktiven Masse und/oder zu einer Dispersion verwendet.

Durch die vorliegende Erfindung wird es möglich, chemisch gekoppelte Polyphenylensulfid-(Per-)Fluorpolymer-Materialien über eine reaktive Umsetzung in Schmelze mit einer stabilen Verarbeitungsmorphologie und einer feindispersen (Per-)Fluorpolymer-Komponente in der PPS-Matrixkomponente anzugeben, welche zu Bauteilen verarbeitet werden kann, die Gleitreibungswerten vergleichbar dem PTFE und niedrige Verschleißkoeffizienten aufweisen. Dadurch erreichen derartige Bauteile eine höhere Lebensdauer.

Die erfindungsgemäßen Compounds aus PPS und (Per-)Fluorpolymer werden durch reaktive Umsetzung in beispielsweise einem Schmelzemischer erhalten. Danach liegt die modifizierte (Per-)Fluorpolymer-Komponente nicht nur homogen verteilt in der PPS-Matrix vor, sondern sie ist mit der PPS-Matrixkomponente durch chemische Kopplung kompatibilisiert, d.h. chemisch gekoppelt. Dies führt zu den vorteilhaften Eigenschaften der erfindungsgemäßen Materialien.

Der Nachweis über die chemische Kopplung wird über die Abtrennung der ungebundenen PPS-Matrixkomponente von der unlöslichen (Per-)Fluorpolymer-Komponente geführt, wonach erfindungsgemäß nicht mehr das reine (Per-)Fluorpolymer erhalten wird, sondern ein (Per-)Fluorpolymer-Produkt, das an der Oberfläche chemisch gekoppelte und nach dem Trennvorgang modifizierte PPS-Polymerketten aufweist.

Durch Verarbeitung der PPS-Matrixmaterialien mit dem modifizierten (Per-)Fluorpolymer-(Mikro-/Nano-)Pulver sind homogen dispergierte Compounds direkt herstellbar, in denen nicht wie bisher bekannt, die (Per-)Fluorpolymer-Komponente nur als unlösliche und unverträgliche Zweitkomponente eingelagert vorliegt. Die (Per-)Fluorpolymer-Komponente steht erfindungsgemäß nun in direkter Wechselwirkung mit dem PPS-Matrixpolymer über kovalent gebundene PPS-Polymerketten, wodurch eine homogene Verteilung und eine stabile Verarbeitungsmorphologie erreicht werden. Über mechanische Kräfte, wie z.B. unter Gleitreibungsbedingungen können die (Per-)Fluorpolymer-Partikel aufgrund der chemischen Bindung über die PPS-Polymerketten im Gegensatz zu physikalischen Mischungen und Einlagerungen nicht mehr einfach aus dem Matrixmaterial herausgerieben werden.

Einen wesentlichen Einfluss auf die Kopplungsreaktionen haben neben der Konzentration an reaktiven Gruppen am PPS und am (Per-)Fluorpolymer-(Mikro-/Nano-)Pulver auch die Schmelzeverarbeitungsbedingungen, da die reaktiven Gruppen nur im direkten Kontakt miteinander reagieren können. Deshalb ist eine möglichst gute Durchmischung der Reaktionskomponenten zu realisieren.

Reaktive Gruppen am PPS sind die Thiol- und/oder Thiolat-Gruppen der linearen oder verzweigten PPS-Polymere, die vorzugsweise als Endgruppen vorhanden sind. Die reaktiven Gruppen im (Per-)Fluorpolymer sind olefinisch ungesättigte Doppelbindungen, die zur Addition mit den Thiol- und/oder Thiolat-Gruppen im PPS befähigt sind. Weiterhin können während der reaktiven Umsetzung in Schmelze die Schmelzeverarbeitungsbedingungen so eingestellt werden, dass durch Eliminierung/Eliminierungsreaktionen solche reaktiven olefinischen Doppelbindungen in der (Per-)Fluorpolymerkomponente gebildet werden. Dazu wird Halogenwasserstoff und vorzugsweise Fluorwasserstoff abgespalten und/oder vorhandene Carbonsäuregruppen reagieren unter Abspaltung von CO₂ und gleichzeitige oder anschließende Eliminierung von Fluorwasserstoff und es werden so in-situ reaktive Kopplungszentren gebildet.

Eine weitere Kopplungsreaktion ist die Reaktion der Thiol- und/oder Thiolat-Gruppen am PPS mit Carbonylfluoridgruppen am (Per-)Fluorpolymer, die z. B. während der Strahlenmodifizierung z. B. mit Elektronen- und/oder Gammastrahlen in Gegenwart von Sauerstoff entstehen.

Eine weitere Möglichkeit ist die Umwandlung von persistenten/langlebigen Perfluor-(peroxy-)Radikalzentren im (Per-)Fluorpolymer zu reaktiven Kopplungsgruppen in Schmelze/unter Schmelzeverarbeitungsbedingungen, wobei nicht ausgeschlossen werden kann, dass auch diese Radikale direkt mit dem PPS unter Kopplung reagieren können.

Derartige persistente/langlebige Perfluor-(peroxy-)Radikalzentren im (Per-)Fluor-polymer sind während der Polymerisationsreaktion des (Per-)Fluorpolymer entstanden oder können auch zusätzlich durch strahlenchemische und/oder plasmachemische Modifizierung von (Per-)Fluorpolymeren erzeugt werden.

Insgesamt werden bei den erfindungsgemäßen Polyphenylensulfid-(Per-)Fluorpolymer-Materialien die (Per-)Fluorpolymer-Partikel über chemische Bindungen mit der PPS-Matrix kompatibilisiert, d. h. verträglich gemacht.

Bei der Herstellung der erfindungsgemäßen Polyphenylensulfid-(Per-)Fluorpolymer-Materialien, d. h. während der Schmelzeverarbeitung der(Per-)Fluorpolymerpartikel mit Polyphenylensulfid wird durch entsprechend große Scherung eine Zerteilung und Durchmischung der Ausgangstoffe erreicht, so dass die funktionellen Gruppen im (Per-)Fluorpolymerpartikel, die zum großen Teil durch (Per-)Fluorpolymerketten sterisch abgeschirmt sind, frei gelegt werden. Durch diese Maßnahme gelangen die bereits vorhandenen und/oder auch entstandenen funktionellen Gruppen und/oder persistenten (langlebigen) Perfluorcarbon-(peroxy-)Radikale der (Per-)Fluorpolymere in direkten Kontakt mit den funktionellen Gruppen des Polyphenylensulfids. Nur im direkten Kontakt miteinander kann die chemische Bindung/Kopplung des (Per-)Fluorpolymer(partikel)s mit dem Polyphenylensulfid erfolgen.

Das (Per-)Fluorpolymer-(Mikro-/Nano-)Pulver kann entweder zusammen mit der PPS-Komponente aufgeschmolzen werden oder direkt in die PPS-Schmelze gegeben werden. Die erfindungsgemäßen Materialien entstehen überraschenderweise direkt in der Schmelzereaktion, wobei vorteilhafterweise direkt weiterverarbeitbare Materialien erhalten werden.

Die reaktive Umsetzung in der Schmelze wird bei PPS-Verarbeitungstemperaturen durchgeführt. Zur Herstellung der erfindungsgemäßen Materialien können alle PPS-Materialien in reiner Form und/oder auch gefüllt und/oder verstärkt eingesetzt werden. Ebenso können weitere Polymere zugegeben werden. Diese Materialien können als Ausgangsmischung eingesetzt werden und/oder während der Schmelzeverarbeitung und/oder in einem Folgeschritt, beispielsweise einer Blendbildung, zugegeben werden. Das Herstellungsverfahren kann als ein- oder mehrstufiges Verfahren realisiert werden.

Die hergestellten Materialien können als Kompaktsubstanz und/oder als Zusatz/Bestandteil von Gleitlagern und/oder in oleophoben und/oder hydrophoben oder damit ausgerüsteten Teil- oder Kompaktmaterialien und/oder in Formteilen und/oder als Oberflächenmodifizierungskomponente z.B. in Gleitfilmen oder -folien und/oder als Beschichtung und/oder als Blendkomponente und/oder als Additiv z.B. in Gleitlacken angewandt werden.

Nachfolgend wird die Erfindung an mehreren Ausführungsbeispielen näher erläutert.

### Beispiel 1

In einem Doppelschneckenextruder ZSK30 (Werner&Pfleiderer) werden X kg/h PPS (Fortron, Ticona) und Y kg/h PTFE (s. Tabelle 1) in den Trichter dosiert. Der Doppelschneckenextruder wird mit dem unten aufgeführten Temperaturprofil und einer Drehzahl von 200 U/min betrieben. Der Schmelzestrang wird nach der Wasserbadkühlung granuliert.

Das erhaltene Material wird durch Spritzgießen zu Halbzeugen und Probekörpern weiterverarbeitet. aus denen die Probekörper hergestellt und an denen die nachfolgenden Eigenschaften bestimmt wurden.

**Tabelle 1: Parameter zur Herstellung der PPS+PTFE-cg-Materialien ZSK-30 - 41 L/D Verarbeitungstemperatur: 290- 330 - 330 - 330 - 300 - 280 - D:270°C Drehzahl: 200 rpm Durchsatz: 8 kg/h Materialien, PPS, natur, Fortron, Ticona) - s. Tabelle 2 x Entlüftung/Entgasung, Granulierdüse, Wasserbadkühlung, Granulator**

| **Versuch** | **Werkstoff** | **X kg/h PPS** (natur, Ticona) | **Y kg/h PTFE** |
|---|---|---|---|
| **PPS 1** | PPS+20TF2025(500)-cg | 6,4 kg/h | 1,6 kg/h TF2025 (mit 500 kGy elektronenbestrahlt) |
| | | PPS Fortron 0205 P4 | |
| **PPS 2** | PPS+30TF2025(500)-cg | 5,6 kg/h | 2,4 kg/h TF2025 (mit 500 kGy elektronenbestrahlt) |
| | | PPS Fortron 0205 P4 | |
| **PPS 3** | PPS+20TF9205-cg | 6,4 kg/h | 1,6 kg/h TF9205 |
| | | PPS Fortron 0205 P4 | |

| | | | |
|---|---|---|---|
| cg...chemisch gekoppelt/kompatibilisiert TF2025 und TF9205... Hersteller Dyneon | | | |

Die Materialkennwerte aus der physikalischen Prüfung sind in Tabelle 2 dargestellt. Die hergestellten Materialien weisen trotz Zugabe des "weichen" PTFE in der Größenordnung von 20 und 30 Ma.-% einen nur geringen Abfall der E-Modul-Werte auf. Analog verhalten sich die Werte für die Zugfestigkeit. Überraschend sind die Werte für die Schlagzähigkeit und die Kerbschlagzähigkeit. Durch die chemische Kopplung/Kompatibilisierung wirkt das PTFE nicht als Fremdstoff sondern als eine Art Schlagzähmodifikator.

**Tabelle 2: Mechanische Kennwerte der PPS- bzw. PPS+PTFE-cg-Materialien (Prüfung ca. 240 h nach Fertigung der Probekörper)**

| **Versuch** | **Werkstoff** | **Et** [GPa] | **σ_{M}** [MPa] | **ε_{M}** [%] | **σ_{B}** [MPa] | **ε_{B}** [%] | **a_{cU}** [kJ/m²] | **a_{cA}** [kJ/m²] |
|---|---|---|---|---|---|---|---|---|
| **PPS 0** | PPS Sackware (Vergleich) | 3,73 | 61,2 | 1,7 | 60,5 | 1,7 | 21,8 | 2,3 |
| **PPS 1** | PPS+20TF2025 (500)-cg | 3,40 | 56,1 | 2,0 | 55,4 | 2,0 | 25,3 | 3,3 |
| **PPS 2** | PPS+20TF2025 (500)-cg | 3,03 | 50,6 | 2,5 | 50,5 | 2,5 | 20,6 | 3,0 |
| **PPS 3** | PPS+20TF9205-cg | 3,35 | 53,0 | 2,0 | 52,0 | 2,0 | 27,5 | 3,1 |

Die tribologischen Eigenschaften der PPS+PTFE-cg-Materialien weisen ein dem PTFE ähnliches Gleitreibungsverhalten auf. Gegenüber dem reinen PPS wird eine Senkung der Verschleißwerte auf 27 bis 30 % bei der Zugabe von 20 Masse-% an PTFE und auf 18 bis 21 % bei Zugabe von 30 Masse-% PTFE festgestellt.

## Patentansprüche

1. Polyphenylensulfid-(Per-)Fluorpolymer-Materialien, bestehend aus einem über Schmelzemodifizierung hergestellten Material aus einer Polyphenylensulfid-Polymer-Matrix (PPS-Polymer-Matrix) mit darin (poly-)dispers verteilten modifizierten (Per-)Fluorpolymeren, wobei die Modifizierung der (Per-)Fluorpolymere mit funktionellen Gruppen realisiert ist, und die modifizierten (Per-)Fluorpolymer-Partikel über Thioether-und/oder Thiolester-Bindung(en) mit der PPS-Polymer-Matrix chemisch gekoppelt vorliegen, wobei die chemischen Kopplungen während der Schmelzemodifizierung durch Reaktion mit bereits vorhandenen funktionellen, reaktiven Gruppen der (Per-)Fluorpolymere und/oder mit während der Schmelzemodifizierung entstandenen funktionellen Gruppen aus persistenten (langlebigen) Perfluorcarbon-(peroxy-)Radikalen der (Per-)Fluorpolymere und/oder mit während der Schmelzemodifizierung entstandenen funktionellen (re-)aktiven Gruppen der (Per-)Fluorpolymere erfolgt sind, und wobei die modifizierte (Per-)Fluorpolymer-Komponentehomogen verteilt in der PPS-Polymer-Matrix vorliegt.

2. Materialien nach Anspruch 1, bei denen als PPS-Matrix lineare und/oder verzweigte Polymere vorhanden sind.

3. Materialien nach Anspruch 1, bei denen als (Per-)Fluorpolymere Polytetrafluorethylen (PTFE) und/oder Poly(tetrafluorethylen-co-hexafluorpropylen) (FEP) und/oder Poly(ethylen-co-tetrafluorethylen) (ETFE) und/oder Polychlortrifluorethylen (PCTFE) und/oder Poly(tetrafluorethylen-co-perfluoralkylvinylether) (TFA oder PFA) vorhanden sind.

4. Materialien nach Anspruch 1, bei denen die chemisch gekoppelten (Per-)Fluorpolymere fein verteilt als Nukleierungsmittel/Kristallkeimbildner in der PPS-Polymer-Matrix fungieren und vorliegen.

5. Verfahren zur Herstellung von Polyphenylensulfid-(Per-)Fluorpolymer-Materialien gemäß Anspruch 1, bei dem Polyphenylensulfid (PPS) mit Thiol- und/oder Thiolat-Gruppen mit einem oder mehreren modifizierten (Per-)Fluorpolymer-(Mikro-/Nano-)Pulvern ein- oder mehrstufig in Schmelze reaktiv compoundiert werden, wobei weitere thermoplastische oder duromere (Hochleistungs-)Polymere und/oder Füllstoffe und/oder Verstärkungsstoffe und/oder Additive zugegeben werden können.

6. Verfahren nach Anspruch 5, bei dem modifizierte (Per-)Fluorpolymer- (Mikro-/Nano-) Pulver mit Perfluoralkylengruppen und/oder mit olefinisch ungesättigten Gruppen und/oder mit Carbonsäuregruppen und/oder Carboxylaten und/oder Carbonsäurehalogenidgruppen, vorteilhafterweise in Form von Carbonsäurefluoridgruppen, eingesetzt werden.

7. Verfahren nach Anspruch 5, bei dem modifizierte (Per-)Fluorpolymer- (Mikro-/Nano-) Pulver mit-persistenten (langlebigen) Perfluorcarbon-(peroxy-)Radikalen eingesetzt werden, wobei vorteilhafterweise die modifizierten (Per-)Fluorpolymer-Pulver mit persistenten (langlebigen) Perfluorcarbon-(peroxy-)Radikalen durch strahlenchemische Modifizierung von (Per-)Fluorpolymer-(Mikro-/Nano-)Pulverpartikel unter Sauerstoffeinfluss hergestellt worden sind.

8. Verfahren nach Anspruch 5, bei dem als modifiziertes (Per-)Fluorpolymer-(Mikro-/Nano-) Pulver (Per-)Fluorpolymere mit thermisch instabilen, funktionellen Gruppen eingesetzt werden.

9. Verfahren nach den Anspruch 5, bei dem als modifiziertes (Per-)Fluorpolymer-(Mikro-/Nano-)Pulver Polytetrafluorethylen (PTFE) und/oder Poly(tetrafluorethylen-co-hexafluorpropylen) (FEP) und/oder Poly(ethylen-co-tetrafluorethylen) (ETFE) und/oder Polychlortrifluorethylen (PCTFE) und/oder Poly(tetrafluorethylen-co-perfluoralkylvinylether) (TFA oder PFA), noch vorteilhafterweise strahlenchemisch abgebautes PTFE, welches ebenfalls vorteilhafterweise unter Sauerstoffeinfluss strahlenchemisch abgebaut ist, eingesetzt werden, wobei weiterhin von Vorteil ist, wenn als strahlenchemisch abgebautes PTFE ein mit mindestens 20 kGy, noch vorteilhafterweise mit mindestens 100 kGy, strahlenchemisch abgebautes und modifiziertes PTFE eingesetzt wird.

10. Verfahren nach Anspruch 5, bei dem als modifiziertes (Per-)Fluorpolymer-(Mikro-/Nano-)Pulver thermisch/thermomechanisch modifizierte (Per-)Fluorpolymer-(Mikro-/Nano-)Pulverpartikel eingesetzt werden.

11. Verfahren nach Anspruch 5, bei dem PPS mit reaktiven Thiol- und/oder Thiolatgruppen in linearer und/oder verzweigter Form eingesetzt wird.

12. Verfahren nach Anspruch 5, bei dem PPS-Polymere mit einer geringen Anzahl an Thiol- und/oder Thiolatgruppen im Verhältnis zu thiol- und/oder thiolatgruppenreichen PPS-Polymeren von 99 : 1 bis 1 : 99 eingesetzt werden, wobei entweder als PPS-Polymere mit einem geringen Anteil an Thiol- und/oder Thiolatgruppen PPS-Polymere mit ≤ 1 % Thiolgruppen an den PPS-Kettenenden oder mit einem hohen Anteil an Thiol- und/oder Thiolatgruppen PPS-Polymere mit > 1% Thiolgruppen an den PPS-Kettenenden eingesetzt werden können.

13. Verfahren nach Anspruch 5, bei dem 1 bis 99 Ma.-%, vorteilhafterweise 5 bis 50 Ma.-%, noch vorteilhafterweise 10 bis 30 Ma.-%, an modifiziertem (Per-)Fluorpolymer-(Mikro-/Nano-)Pulverpartikeln, bezogen auf das PPS-Polymer, eingesetzt werden.

14. Verfahren nach Anspruch 5, bei dem die reaktive Compoundierung in einem Schmelzemischer und/oder in einem Kneter und/oder einem Zwei- oder Mehrwellenextruder und/oder in einem Planetwalzenextruder durchgeführt wird, wobei die reaktive Compoundierung bei Schmelzeverarbeitungstemperaturen von mindestens der oder über der Schmelzetemperatur des PPS-Materials und/oder des (Per-)Fluorpolymer-Materials durchgeführt wird.

15. Verfahren nach Anspruch 5, bei dem eine weitere reaktive Umsetzung während und/oder nach der reaktiven Compoundierung durchgeführt wird.

16. Verfahren nach Anspruch 5, bei dem das modifizierte (Per-)Fluorpolymer-(Mikro-/Nano-)Pulver während der Compoundierung an einer oder mehreren Dosierstellen in die Schmelze zugesetzt wird, wobei das modifizierte (Per-)Fluorpolymer-(Mikro-/Nano-)Pulver als Gemisch aus unmodifizierten und modifizierten (Per-)Fluorpolymeren eingesetzt wird.

17. Verwendung von Polyphenylensulfid-(Per-)Fluorpolymer-Materialien gemäß mindestens einem der Ansprüche 1 bis 4 und hergestellt nach mindestens einem der Ansprüche 5 bis 16 als Kompaktsubstanz und/oder als Zusatz/Bestandteil von Gleitlagern und/oder in oleophoben und/oder hydrophoben oder damit ausgerüsteten Teil- oder Kompaktmaterialien und/oder in Formteilen und/oder als Oberflächenmodifizierungskomponente in (Gleit-)Filmen oder als Beschichtung und/oder in (Gleit-)Folien und/oder als Blendkomponente und/oder als Additiv.

18. Verwendung nach Anspruch 17 zur Weiterverarbeitung zu einer Thermoplastschmelze und/oder zu einer reaktiven Masse und/oder zu einer Dispersion.

## Claims

1. Polyphenylene sulphide-(per)fluoropolymer materials composed of a material produced by melt-modification from a polyphenylene sulphide polymer matrix (PPS polymer matrix) with modified (per)fluoropolymers distributed in (poly)disperse manner therein, where the modification of the (per)fluoropolymers has been achieved with functional groups, and the modified (per)fluoropolymer particles are present in a form that has chemical coupling to the PPS polymer matrix via thioether and/or thiolester bond(s), where the chemical couplings have been achieved during the melt-modification through reaction with functional, reactive groups already present in the (per)fluoropolymers and/or with functional groups produced during the melt-modification from persistent (long-lived) perfluorocarbon(peroxy) radicals in the (per)fluoropolymers and/or with functional (re)active groups produced during the melt-modification in the (per)fluoropolymers, and where the modified (per)fluoropolymer component is present in homogeneous distribution in the PPS polymer matrix.

2. Materials according to Claim 1, in which linear and/or branched polymers are present as PPS matrix.

3. Materials according to Claim 1, in which the following are present as (per)fluoropolymers: polytetrafluoroethylene (PTFE) and/or poly(tetrafluoroethylene-co-hexafluoropropylene) (FEP) and/or poly(ethylene-co-tetrafluoroethylene) (ETFE) and/or polychlorotrifluoroethylene (PCTFE) and/or poly(tetrafluoroethylene-co-perfluorinated alkyl vinyl ether) (TFA or PFA).

4. Materials according to Claim 1, in which the finely distributed chemically coupled (per)fluoropolymers are present as, and function as, (crystal) nucleating agents in the PPS polymer matrix.

5. Process for the production of polyphenylene sulphide-(per)fluoropolymer materials according to Claim 1, in which polyphenylene sulphide (PPS) having thiol groups and/or thiolate groups is subjected to single- or multistage reactive compounding in the melt with one or more modified (per)fluoropolymer (micro/nano)powders, where other thermoplastic or thermoset (high-performance) polymers and/or fillers and/or reinforcing materials and/or additives can be added.

6. Process according to Claim 5, which uses modified (per)fluoropolymer (micro/nano)powders having perfluoroalkylene groups and/or having olefinically unsaturated groups and/or having carboxylic acid groups and/or having carboxylate groups and/or having carbonyl halide groups, advantageously in the form of carbonyl fluoride groups.

7. Process according to Claim 5, which uses modified (per)fluoropolymer (micro/nano)powders having persistent (long-lived) perfluorocarbon(peroxy) radicals, where advantageously the modified (per)fluoropolymer powders having persistent (long-lived) perfluorocarbon(peroxy) radicals have been produced by using ionizing radiation to modify (per)fluoropolymer (micro/nano)powder particles with exposure to oxygen.

8. Process according to Claim 5, which uses, as modified (per)fluoropolymer (micro/nano)powders, (per)fluoropolymers having thermally unstable functional groups.

9. Process according to Claim 5, which uses, as modified (per)fluoropolymer (micro/nano)powders, polytetrafluoroethylene (PTFE) and/or poly(tetrafluoroethylene-co-hexafluoropropylene (FEP) and/or poly(ethylene-co-tetrafluoroethylene) (ETFE) and/or polychlorotrifluoroethylene (PCTFE) and/or poly(tetrafluoroethylene-co-perfluorinated alkyl vinyl ether) (TFA or PFA), more advantageously PTFE which has been degraded by ionizing radiation and which likewise advantageously has been degraded by ionizing radiation with exposure to oxygen, where it is moreover advantageous to use, as PTFE degraded by ionizing radiation, a PTFE modified and degraded by ionizing radiation using a dose of at least 20 kGy, more advantageously at least 100 kGy.

10. Process according to Claim 5, which uses, as modified (per)fluoropolymer (micro/nano)powders, thermally/thermomechanically modified (per)fluoropolymer (micro/nano)powder particles.

11. Process according to Claim 5, which uses PPS having reactive thiol and/or thiolate groups in linear and/or branched form.

12. Process according to Claim 5, which uses PPS polymers having a small number of thiol and/or thiolate groups in a ratio of from 99 : 1 to 1 : 99 to thiol- and/or thiolate-group-rich PPS polymers, where either PPS polymers having ≤ 1% of thiol groups at the PPS chain ends can be used as PPS polymers having a small proportion of thiol and/or thiolate groups or PPS polymers having > 1% of thiol groups at the PPS chain ends can be used having a high proportion of thiol and/or thiolate groups.

13. Process according to Claim 5, which uses from 1 to 99% by mass, advantageously from 5 to 50% by mass, more advantageously from 10 to 30% by mass, of modified (per)fluoropolymer (micro/nano)powder particles, based on the PPS polymer.

14. Process according to Claim 5, in which the reactive compounding is carried out in a melt mixer and/or in a kneader and/or in a twin- or multiscrew extruder and/or in a planetary-gear extruder, where the reactive compounding is carried out at melt processing temperatures at or above the melting point of the PPS material and/or of the (per)fluoropolymer material.

15. Process according to Claim 5, in which a further reaction is carried out during and/or after the reactive compounding.

16. Process according to Claim 5, in which the modified (per)fluoropolymer (micro/nano)powder is added during the compounding at one or more feed points into the melt, where the modified (per)fluoropolymer (micro/nano)powder is used in the form of mixture of unmodified and modified (per)fluoropolymers.

17. Use of polyphenylene sulphide-(per)fluoropolymer materials according to at least one of Claims 1 to 4 and produced according to at least one of Claims 5 to 16 as compact substance and/or as addition/constituent of sliding bearings and/or in oleophobic and/or hydrophobic particulate or compact materials or materials modified to have said properties, and/or in mouldings and/or as surface-modifying component in (friction-reducing) films or as coating and/or in (friction-reducing) foils and/or as blend component and/or as additive.

18. Use according to Claim 17 for further processing to give a thermoplastic melt and/or to give a reactive composition and/or to give a dispersion.

## Revendications

1. Matériaux polysulfure de phénylène-(per)fluoropolymères, constitués par un matériau fabriqué par modification à l'état fondu à partir d'une matrice polymère de polysulfure de phénylène (matrice polymère PPS) contenant des (per)fluoropolymères modifiés répartis sous forme (poly)dispersée, la modification des (per)fluoropolymères étant réalisée avec des groupes fonctionnels, et les particules de (per)fluoropolymères modifiés se présentant sous forme couplée chimiquement par des liaisons thioéther et/ou thioester avec la matrice polymère de PPS, les couplages chimiques étant formés pendant la modification à l'état fondu par réaction avec des groupes réactifs fonctionnels déjà présents des (per)fluoropolymères et/ou avec des groupes fonctionnels formés pendant la modification à l'état fondu à partir de radicaux perfluorocarbone-(peroxy) persistants (de longue durée de vie) des (per)fluoropolymères et/ou avec des groupes fonctionnels (ré)actifs fonctionnels des (per)fluoropolymères formés pendant la modification à l'état fondu, et le composant (per)fluoropolymère modifié se présentant sous forme distribuée de manière homogène dans la matrice polymère de PPS.

2. Matériaux selon la revendication 1, dans lesquels des polymères linéaires et/ou ramifiés sont présents en tant que matrice de PPS.

3. Matériaux selon la revendication 1, dans lesquels du polytétrafluoroéthylène (PTFE) et/ou du poly(tétrafluoroéthylène-co-hexafluoropropylène) (FEP) et/ou du poly(éthylène-co-tétrafluoroéthylène) (ETFE) et/ou du polychlorotrifluoroéthylène (PCTFE) et/ou du poly(tétrafluoroéthylène-co-éther perfluoroalkylvinylique) (TFA ou PFA) sont présents en tant que (per)fluoropolymères.

4. Matériaux selon la revendication 1, dans lesquels les (per)fluoropolymères couplés chimiquement fonctionnent et sont présents sous forme finement divisée en tant qu'agent de nucléation et/ou agent de formation de germes cristallins dans la matrice polymère de PPS.

5. Procédé de fabrication de matériaux polysulfure de phénylène-(per)fluoropolymères selon la revendication 1, selon lequel du polysulfure de phénylène (PPS) contenant des groupes thiol et/ou thiolate est mélangé réactivement à l'état fondu en une ou plusieurs étapes avec une ou plusieurs (micro-/nano-)poudres (per)fluoropolymères modifiées, d'autres polymères (hautes performances) thermoplastiques ou duromères et/ou charges et/ou matières renforçantes et/ou additifs pouvant être ajoutés.

6. Procédé selon la revendication 5, selon lequel des (micro-/nano-)poudres (per)fluoropolymères modifiées contenant des groupes perfluoroalkylène et/ou des groupes oléfiniquement insaturés et/ou des groupes acide carboxylique et/ou des carboxylates et/ou des groupes halogénure d'acide carboxylique, plus avantageusement sous la forme de groupes fluorure d'acide carboxylique, sont utilisées.

7. Procédé selon la revendication 5, selon lequel des (micro-/nano-)poudres (per)fluoropolymères modifiées contenant des radicaux perfluorocarbone-(peroxy) persistant (de longue durée de vie) sont utilisées, les poudres (per)fluoropolymères modifiées contenant des radicaux perfluorocarbone-(peroxy) persistant (de longue durée de vie) étant avantageusement fabriquées par modification chimique par rayonnement de particules de (micro-/nano-)poudres (per)fluoropolymères sous l'effet de l'oxygène.

8. Procédé selon la revendication 5, selon lequel des (per)fluoropolymères contenant des groupes fonctionnels thermiquement instable sont utilisés en tant que (micro-/nano-)poudres (per)fluoropolymères modifiées.

9. Procédé selon la revendication 5, selon lequel du polytétrafluoroéthylène (PTFE) et/ou du poly(tétrafluoroéthylène-co-hexafluoropropylène) (FEP) et/ou du poly(éthylène-co-tétrafluoroéthylène) (ETFE) et/ou du polychlorotrifluoroéthylène (PCTFE) et/ou du poly(tétrafluoroéthylène-co-éther perfluoroalkylvinylique) (TFA ou PFA), encore plus avantageusement du PTFE décomposé chimiquement par rayonnements, qui est avantageusement également décomposé chimiquement par rayonnements sous l'effet de l'oxygène, sont utilisés en tant que (micro-/nano-)poudres (per)fluoropolymères modifiées, un PTFE décomposé chimiquement par rayonnements et modifié avec au moins 20 kGy, encore plus avantageusement avec au moins 100 kGy, étant par ailleurs avantageusement utilisé en tant que PTFE décomposé chimiquement par rayonnement.

10. Procédé selon la revendication 5, selon lequel des particules de (micro-/nano-)poudres (per)fluoropolymères modifiées thermiquement/thermomécaniquement sont utilisées en tant que (micro-/nano-)poudres (per)fluoropolymères modifiées.

11. Procédé selon la revendication 5, selon lequel du PPS contenant des groupes thiol et/ou thiolate réactifs sous forme linéaire et/ou ramifiée est utilisé.

12. Procédé selon la revendication 5, selon lequel des polymères PPS contenant un faible nombre de groupes thiol et/ou thiolate sont utilisés en un rapport de 99:1 à 1:99 par rapport à des polymères PPS riches en groupes thiol et/ou thiolate, des polymères PPS contenant ≤ 1 % de groupes thiol aux extrémités des chaînes PPS pouvant être utilisés en tant que polymères PPS contenant une faible proportion de groupes thiol et/ou thiolate, ou des polymères PPS contenant > 1 % de groupes thiols aux extrémités des chaînes PPS pouvant être utilisés contenant une proportion élevée de groupes thiol et/ou thiolate.

13. Procédé selon la revendication 5, selon lequel 1 à 99 % en masse, plus avantageusement 5 à 50 % en masse, encore plus avantageusement 10 à 30 % en masse, de particules de (micro-/nano-)poudres (per)fluoropolymères modifiées sont utilisées, par rapport au polymère PPS.

14. Procédé selon la revendication 5, selon lequel le mélange réactif est réalisé dans un mélangeur de masses fondues et/ou dans un malaxeur et/ou dans une extrudeuse bi- ou multivis et/ou dans une extrudeuse à cylindres planétaires, le mélange réactif étant réalisé à des températures d'usinage de la masse fondue d'au moins ou supérieures à la température de fusion du matériau PPS et/ou du matériau (per)fluoropolymère.

15. Procédé selon la revendication 5, selon lequel une transformation réactive supplémentaire est réalisée pendant et/ou après le mélange réactif.

16. Procédé selon la revendication 5, selon lequel la (micro-/nano-)poudre (per)fluoropolymère modifiée est ajoutée à la masse fondue pendant le mélange à un ou plusieurs emplacements de dosage, la (micro-/nano-)poudre (per)fluoropolymère modifiée étant utilisée sous la forme d'un mélange de (per)fluoropolymères. non modifiés et modifiés.

17. Utilisation de matériaux polysulfure de phénylène-(per)fluoropolymères selon au moins l'une quelconque des revendications 1 à 4 et fabriqués selon au moins l'une quelconque des revendications 5 à 16 en tant que substance compacte et/ou en tant qu'additif/constituant de paliers lisses et/ou dans des matériaux partiels et/ou compact oléophobes et/ou hydrophobes ou ainsi traités et/ou dans des pièces moulées et/ou en tant que composant de modification de surface dans des films (lubrifiants) ou en tant que revêtement et/ou dans des feuilles (lubrifiantes) et/ou en tant que composant de mélange et/ou en tant qu'additif.

18. Utilisation selon la revendication 17 pour la transformation ultérieure en une masse fondue thermoplastique et/ou en une masse réactive et/ou en une dispersion.
